# DEMANDE DE BREVET EUROPEEN

(11) **EP 4 060 270 A1**
(43) Date de publication de la demande: **21.09.2022**
(21) Numéro de dépôt: 22162808.4
(22) Date de dépôt: 17.03.2022
(51) Int. Cl.: F27D 1/16

(54) **PROCÉDÉ DE RÉPARATION D'UNE SOLE D'UN FOUR PAR INJECTION**

(30) Priorité: 17.03.2021 FR 2102681
(71) Demandeur: IRF Europa S.r.l., 31030 Casier (IT)
(72) Inventeur: PORDONE, Charles, 42320 CELLIEU (FR)
(74) Mandataire: Regimbeau

(57) **Abrégé**

La présente invention concerne un procédé de réparation d'une sole (III) en matériau réfractaire d'une paroi inférieure (II) d'un four (I), le procédé est caractérisé en ce qu'il comprend au moins les étapes suivantes :
(a) perçage depuis une face externe (IIb) de la paroi inférieure (II) d'un premier trou (50) dans la sole (III) débouchant au voisinage d'au moins une portion endommagée d'une face interne (IIa) de la paroi inférieure (II) ;
(b) à l'aide d'un dispositif d'injection (1), injection, par le premier trou (50), d'un revêtement (V) sur une zone (51) de la sole (III) autour du premier trou (50) qui couvre ladite au moins une portion endommagée, ledit dispositif d'injection (1) étant refroidi en continu et isolé de la chaleur du four (I) par deux volumes concentriques de liquide de refroidissement;
(c) bouchage du premier trou (50).

## Description

### DOMAINE DE L'INVENTION

La présente invention concerne le domaine de la maintenance des fours industriels, et plus particulièrement, l'injection de revêtement par la sole dans un four industriel.

### ETAT DE LA TECHNIQUE

D'une manière connue, les fours industriels, tel que les fours de verrerie, sont des cuves en matériaux réfractaires couvrant des surfaces importantes pouvant aller, par exemple, de 50m² à 500m².

Le plus souvent ces fours comprennent une dalle en matériau réfractaire, tel que des dalles préfabriquées ou du béton. Au fil des cycles de chauffage et des déplacements de matière dans le four, ces dalles finissent par se dégrader et subir une forte usure jusqu'à quelquefois disparaître et présenter des zones d'usure dans le revêtement en béton.

Ainsi il est possible de réparer ces usures en déposant une couche de revêtement pour couvrir ces usures

Une méthode connue consiste à vider le four et le refroidir (i.e. baisser la température jusqu'à environ 1200°C / 1300°C), ce qui est très chronophage et implique une importante perte de productivité due à l'arrêt du four. Lorsque le four a suffisamment refroidi, un perçage est réalisé dans des superstructures du four (par exemple une surface latérale ou supérieur-du four). Puis à partir de ce perçage, une lance est déployée pour être positionnée au-dessus de la zone d'usure. Enfin du matériau de revêtement est injecté via la lance pour arroser la sole au-dessus de la zone d'usure, de sorte à la combler.

Outre les problématiques liées à l'arrêt du four, cette méthode ne permet pas d'atteindre l'ensemble des zones de la sole. En effet, il n'est pas possible de percer n'importe où dans les superstructures-et la lance d'injection présente une longueur maximale, de sorte qu'il est généralement très difficile d'envoyer du matériau de revêtement sur certaines zones de la sole.

Dans ce contexte, il est nécessaire de fournir une méthode d'injection de revêtement sur la sole d'un four pour combler les zones d'usure, qui permettent d'accéder à n'importe quel endroit de la sole et qui évite d'avoir à arrêter complètement le four pour le réparer à froid.

### EXPOSE DE L'INVENTION

Selon un premier aspect, l'invention propose un procédé de réparation d'une sole en matériau réfractaire d'une paroi inférieure d'un four.

Le procédé comprend au moins les étapes suivantes :
(a) perçage depuis une face externe de la paroi inférieure d'un premier trou dans la sole débouchant au voisinage d'au moins une portion endommagée d'une face interne de la paroi inférieure ;
(b) à l'aide d'un dispositif d'injection, injection, par le premier trou, d'un revêtement sur une zone de la sole autour du premier trou qui couvre ladite au moins une portion endommagée, ledit dispositif d'injection étant refroidi en continu et isolé de la chaleur du four par deux volumes concentriques de liquide de refroidissement ;
(c) bouchage du premier trou.

Le procédé peut comprendre une étape (a1) de chauffage de la zone de la sole autour du premier trou.

L'étape (a1) de chauffage peut être réalisée avec un bruleur.

L'étape (a1) de chauffage peut être réalisée en amenant la zone autour du premier trou à une température supérieure ou égale à une température de fusion d'un matériau déposé sur la sole, tel que du verre.

L'étape (c) peut comprendre une phase (c1) de perçage d'un deuxième trou coaxial du premier trou et présentant un diamètre supérieur au diamètre du premier trou, et dans lequel l'étape (c) peut comprendre le bouchage du deuxième trou.

L'étape (c) peut comprendre une phase (c2) de bouchage du premier trou ou du deuxième trou avec un matériau réfractaire.

L'étape (b) peut être réalisée sous surveillance vidéo.

Le procédé peut comprendre une étape préalable (a0) de détection de ladite portion endommagée de la sole, pour réaliser l'étape (a) de perçage.

L'étape (b) peut être réalisée en injectant le revêtement à une altitude supérieure à l'altitude de la face interne, pour que le revêtement s'écoule par gravité sur la zone.

Le procédé peut comprendre en outre, après l'injection d'une quantité de revêtement, un arrachement d'au moins une partie d'une couche sacrificielle du dispositif d'injection pour extraire le dispositif d'injection du premier trou.

De préférence, pendant la mise en œuvre des étapes (a) à (c), le four est à une température comprise entre 1300 et 1600°C.

Selon un deuxième aspect, l'invention concerne un dispositif d'injection adapté pour mettre en œuvre un procédé selon l'invention, ledit dispositif d'injection comprenant une lance d'injection présentant une pluralité de cylindres concentriques :
(i) un premier cylindre définissant un premier volume adapté pour la circulation et l'injection du revêtement sous forme liquide ou pâteuse,
(ii) un deuxième cylindre entourant le premier cylindre définissant un deuxième volume adapté pour l'introduction et la circulation d'un liquide de refroidissement autour du premier cylindre, et
(iii) un troisième cylindre entourant le second cylindre définissant un troisième volume, communiquant avec le deuxième volume et adapté pour la circulation et l'échappement du liquide de refroidissement, ledit troisième cylindre étant entouré d'une couche sacrificielle adaptée pour être au moins partiellement arrachée après une injection d'une quantité de revêtement.

De préférence, le troisième cylindre est entouré d'une couche sacrificielle adaptée pour être au moins partiellement arrachée après une injection d'une quantité de revêtement.

### BREVE DESCRIPTION DES FIGURES

D'autres caractéristiques, buts et avantages de l'invention ressortiront de la description qui suit, qui est purement illustrative et non limitative, et qui doit être lue en regard du dessin annexé sur lequel :
La figure 1 est une vue de dessus schématique de la paroi inférieure d'un four dont la sole présente des zones d'usure.
La figure 2 est une représentation schématique d'une étape de perçage d'un premier trou d'un procédé selon l'invention.
La figure 3 est une représentation schématique d'une étape de chauffage d'un procédé selon l'invention.
La figure 4 est une représentation schématique de l'introduction d'un dispositif d'injection selon l'invention.
La figure 5 est une représentation schématique d'une étape d'injection de revêtement d'un procédé selon l'invention.
La figure 6 est une représentation schématique d'une étape de d'extraction d'un dispositif d'injection selon l'invention.
La figure 7 est une représentation schématique d'une étape de perçage d'un deuxième trou d'un procédé selon l'invention.
La figure 8 est une représentation schématique d'une étape bouchage du deuxième trou d'un procédé selon l'invention.
La figure 9 est une représentation schématique en coupe d'un dispositif d'injection selon l'invention.

### DESCRIPTION DETAILLEE DE MODES DE REALISATION

### Contexte du four

L'invention se place dans le contexte d'un four I industriel

Il est précisé que l'on considère un four I ayant un volume prismatique - préférentiellement en forme de pavé - avec une pluralité de parois délimitant le volume du four I.

Typiquement, le four I présente une paroi inférieure II, une pluralité de parois latérales et une paroi supérieure. La paroi inférieure II est située à proximité du sol d'un bâtiment sur lequel repose le four I et constitue le plancher, le sol du four.

En d'autres termes, les éléments qui sont simplement posés dans le four I repose sur la paroi inférieure II et les écoulements de matière, dus à la gravité se dirige vers la paroi inférieure II.

Chaque paroi présente une face interne positionnée dans le four et une face externe située à l'extérieur du four.

La face interne IIa de la paroi inférieure II est recouverte d'une sole III en matériau réfractaire. Selon une disposition particulière, la sole III peut constituer la paroi inférieure II.

Typiquement ce matériau réfractaire est un béton de composition quelconque, qui peut par exemple être un assemblage de pièces préfabriquées.

Par sole III, il est entendu une ou plusieurs couches de matériaux réfractaire recouvrant la face interne IIa de la paroi inférieure II. On peut aussi parler de dalle, de chape.

Dans le cas par exemple d'un four de verrerie, ou d'un four à métal (tel que de l'aluminium), selon l'exemple ici présenté, la sole peut présenter plusieurs couches superposées, une première couche IIIa d'isolation, une deuxième couche IIIb d'étanchéité et une troisième couche IIIc de dallage réfractaire dense.

En outre, il est précisé que le plus souvent, la paroi inférieure II du four I repose sur un réseau de poteaux, de pilotis. De sorte qu'il existe un espace entre le four I et le sol du bâtiment sur lequel il repose.

Enfin, dans le cas par exemple d'un four de verrerie, mais c'est aussi valable pour le métal, le four est à une température dépassant les 1000°C. Cela génère d'importantes contraintes thermiques sur le matériau réfractaire de la sole III, qui finit par former des zones d'usure IV.

### Procédé de réparation

Selon un premier aspect, l'invention propose un procédé de réparation d'une sole III en matériau réfractaire d'une paroi inférieure II d'un four I tel que décrit précédemment. Le four peut être rempli, par exemple avec du verre ou du métal, dans son état d'opération habituel. Le four peut présenter, pendant le procédé de réparation, une température d'opération habituelle, c'est-à-dire entre 1300 et 1600 °C.

Le procédé selon l'invention comprend au moins les étapes suivantes :
(a) perçage d'un premier trou 50 débouchant au voisinage d'au moins une portion endommagée d'une face interne de la paroi inférieure, le perçage étant effectué d'une face externe de la paroi inférieure vers la face interne de la paroi inférieure ;
(b) injection par le premier trou 50, d'un revêtement V sur une zone 51 de la sole III autour du premier trou 50 qui couvre ladite au moins une portion endommagée ;
(c) bouchage du premier trou 50.

Ainsi, d'une manière particulièrement, avantageuse, l'invention propose de réaliser l'injection de revêtement en passant directement au travers de la paroi inférieure II, sous le four I. Tel que cela sera décrit ci-après, cette disposition permet d'accéder à n'importe quelle zone d'usure IV de la sole III. En d'autres termes, le procédé selon l'invention s'affranchit des contraintes de longueur de lance en proposant de passer sous le four I pour percer la paroi inférieure II directement ou à proximité de la zone 51 à traiter. De la sorte, l'outil d'injection est amené au plus près de la zone 51 à traiter. En sus, tel que cela sera détaillé ci-après, cette manipulation se fait de manière très localisée et ne nécessite pas de refroidir le four I.

### Perçage de la paroi inférieure.

Tel que cela sera décrit ci-après, l'étape (a) de perçage permet de définir la localisation de l'introduction d'un dispositif d'injection 1 dans le four. En effet, tel que cela sera décrit ci-après, le dispositif d'injection 1 est introduit dans le four I, par le premier trou 50. Le choix de la localisation du perçage est donc stratégique.

Selon une disposition particulièrement avantageuse, l'étape (a) peut être précédée d'une étape préalable (a0) de détection d'une portion endommagée de la face interne, pour réaliser l'étape (a) de perçage dans cette portion endommagée. Typiquement une portion endommagée est une zone d'usure IV.

Typiquement, cette étape préalable (a0) peut être réalisée avec une caméra thermique. Le principe étant que les zones d'usure IV laissent plus passer la chaleur, ce qui peut être repérer avec une caméra thermique ou tout autre détecteur de chaleur ou de rayonnement infra-rouge.

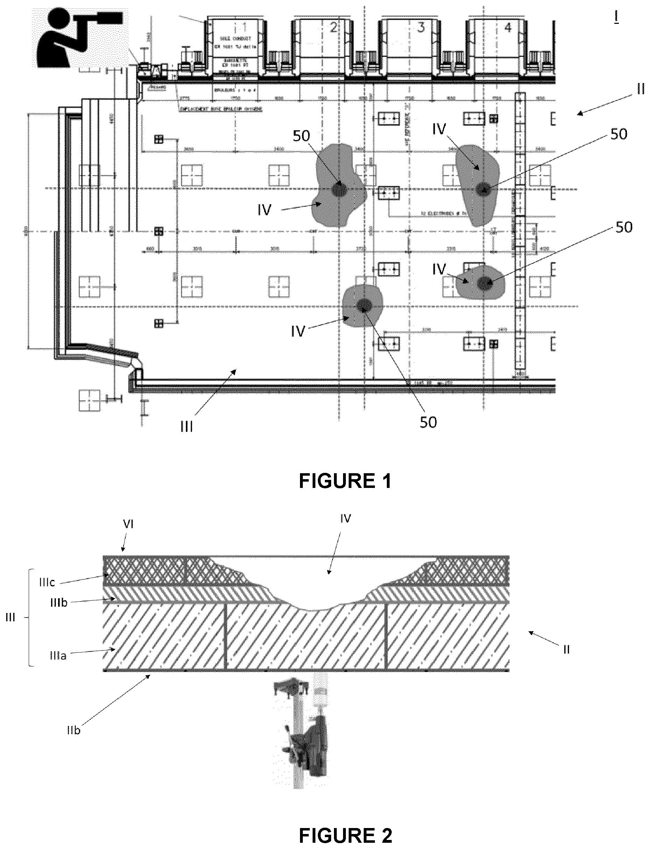

D'une manière particulièrement avantageuse, l'étape préalable (a0) peut permettre de cartographier la position des zones d'usure IV, tel que cela est représenté sur la figure 1.

Une fois, les zones d'usure IV détectées et localisées, il possible d'établir une stratégie d'injection.

Typiquement, le perçage de l'étape (a) peut être réalisé directement au cœur d'une zone d'usure IV. Néanmoins, pour optimiser le nombre de perçage et reboucher plus rapidement de nombreuses zones d'usure IV, il est possible de travailler en regroupant les zones d'usure IV par zones 51. On prend alors en considération la zone 51 couverte par le dispositif d'injection et on détermine des secteurs dans lesquels il faut réaliser une injection. A titre d'exemple non limitatif, le dispositif d'injection 1 peut par exemple couvrir une zone 51 périphérique de 20m² autour du point d'injection. Dans cet exemple, il peut être possible de regrouper plusieurs zones d'usure IV se trouvant dans une même zone 51 périphérique de 20m².

D'une manière particulièrement avantageuse, on tiendra aussi compte de la profondeur des différentes zones d'usure IV. Cette profondeur est repérable lors d'une cartographie thermique ou de l'installation d'un endoscope dans le four I après une vidange du four I. En effet, schématiquement, plus une zone d'usure IV est profonde plus il y aura des risques de coulée de verre (de fuite) par la sole III.

Ainsi, selon un mode de réalisation avantageux, en regroupant les zones d'usure IV par zones 51 d'injection on aura soin de positionner le dispositif d'injection 1 dans (ou à proximité) de la zone d'usure IV la plus profonde.

Une fois que les zones 51 à traiteront été identifiées et que les points de perçage ont été déterminés, il est possible de procéder au perçage.

La suite de la description se concentrera sur le cas d'un seul perçage, mais bien sûr ce qui va suivre est applicable à tous les perçages réalisés selon le procédé de l'invention.

L'étape (a) de perçage consiste à utiliser un foret (ou une fraise) pour percer un premier trou 50 débouchant à partir de la face externe IIb de la paroi inférieure II. Le foret est donc appliqué sur la face externe IIb puis traverse la paroi inférieure II, la sole III et une éventuelle couche de verre ou de métal positionnée sur la sole III.

### Chauffage de la zone

Selon une disposition particulièrement avantageuse, le procédé selon l'invention propose une étape (a1) de chauffage la zone 51 de la sole III autour du premier trou 50.

D'une manière préférentielle cette étape est réalisée avec un bruleur 18.

Comme indiqué précédemment, il est probable qu'aux alentours du trou 50, la sole III soit recouverte d'une couche de verre ou de métal issue des processus de chauffe dans le four I.

Avant de procéder à l'injection d'un revêtement V sur la sole III, il peut être avantageux de s'assurer de la suppression de cette couche de verre ou de métal présent dans la zone. L'étape (a1) de chauffe a précisément pour objectif de supprimer cette couche de verre ou de métal présent dans la zone 51 autour du trou 50.

D'une manière préférentielle, le chauffage est réalisé à une température supérieure ou égale à une température de fusion d'un matériau déposé sur la sole III, tel que du verre ou du métal.

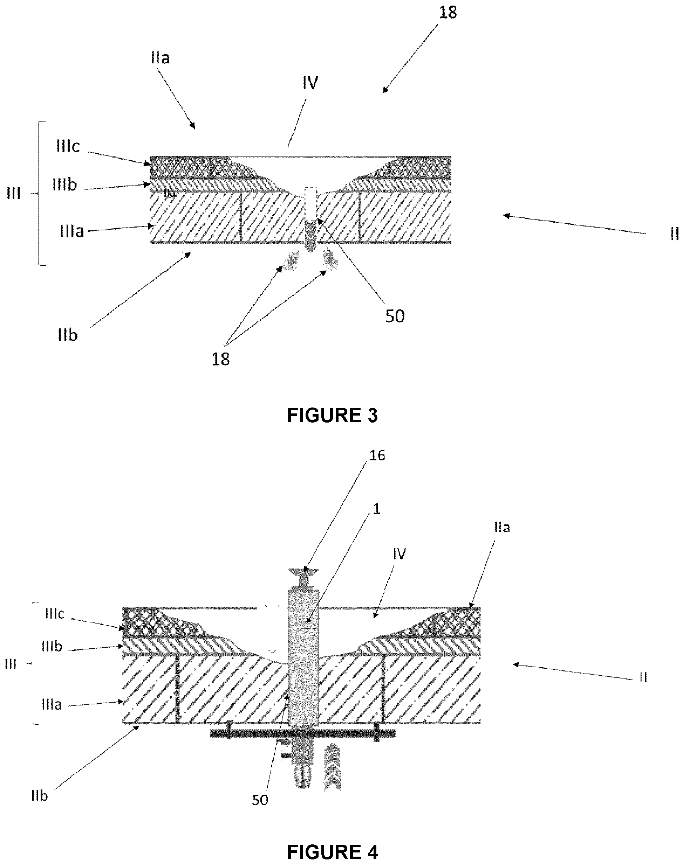

En référence à la figure 3, le chauffage est réalisé en positionnant le bruleur 18 sous la sole III. La flamme du bruleur 18 est dirigée vers la sole III, et plus particulièrement vers la couche IIIa pour faire fondre une éventuelle couche de verre ou le métal. Le matériau (verre ou métal) fondu peut alors s'écouler par le premier trou 50. Quand bien même il ne s'écoule pas par le premier trou 50, le matériau ainsi chauffé est séparé de la sole III à laquelle il n'adhère plus.

### Injection du revêtement

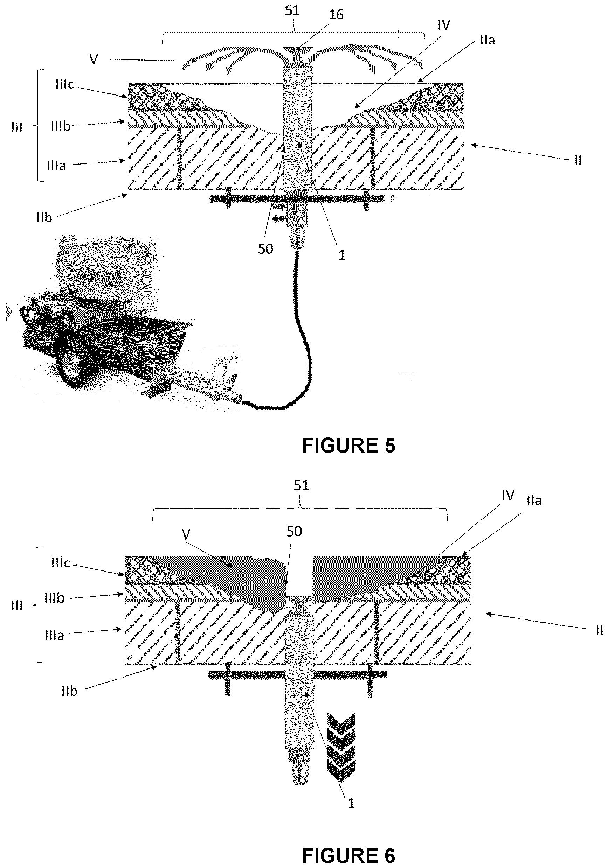

Il est ensuite possible de procéder à l'étape (b) d'injection du revêtement, telle que schématisée sur la figure 5.

Il est précisé que les étapes (a0), (a1) et (a2) sont optionnelles et qu'il est possible de procéder directement au perçage de l'étape (a) suivi directement de l'injection de l'étape (b).

L'injection est réalisée en introduisant, au travers du premier trou 50, un dispositif d'injection 1 qui sera décrit ci-après, tel que schématisé sur la figure 4. Le dispositif d'injection 1 permet de pulvériser du revêtement V sur la sole III, dans une zone 51 entourant le premier trou 50 (et donc le dispositif d'injection 1).

Typiquement le revêtement V injecté est un matériau réfractaire du type béton.

Tel que cela sera décrit ci-après le dispositif d'injection I se présente sous la forme d'une lance qui injecte et pulvérise le revêtement V de manière circonférentielle selon un secteur angulaire déterminé. La profondeur d'introduction, dans le premier trou 50 et donc la hauteur d'une extrémité 16 du dispositif d'injection 1 dans le four I permet d'ajuster la surface atteinte par le revêtement V. De préférence, la lance est insérée dans le trou 50 de sorte que l'extrémité supérieure de la lance soit agencée à une hauteur supérieure à la hauteur de la face interne IIa de la sole pendant l'injection.

D'une manière particulièrement avantageuse, l'étape (b) d'injection du revêtement peut être réalisée sous surveillance vidéo. Dans ce cas, une caméra vidéo est positionnée sur le dispositif d'injection 1 ou directement dans le four I. La surveillance vidéo permet de suivre l'évolution de l'injection du revêtement V et permet donc de déterminer le moment où le revêtement V injecté a complètement rebouché les zones d'usure IV de la zone 51.

D'une manière particulièrement avantageuse, l'injection du revêtement V est réalisée à une altitude supérieure à l'altitude de la face interne IIa. Ainsi, le revêtement tombe par gravité sur la zone 51. En d'autres termes, le revêtement V est pulvérisé sous la forme d'une pluie qui tombe par gravité sur la zone 51.

Il est alors possible d'arrêter l'injection du revêtement V et de retirer le dispositif d'injection 1, comme schématisé sur la figure 6. Après avoir été injecté sur la zone 51, le revêtement V sèche et durcit. Le séchage du revêtement est d'autant plus rapide que le four I n'a pas refroidi.

En sus, la nature du matériau réfractaire du revêtement V injecté fait qu'il est possible que lors de l'extraction du dispositif d'injection 1 il se produise un arrachement local conduisant à un état de surface irrégulier dans le premier trou 50. Ce phénomène d'arrachement sera détaillé ci-après.

### Bouchage du trou

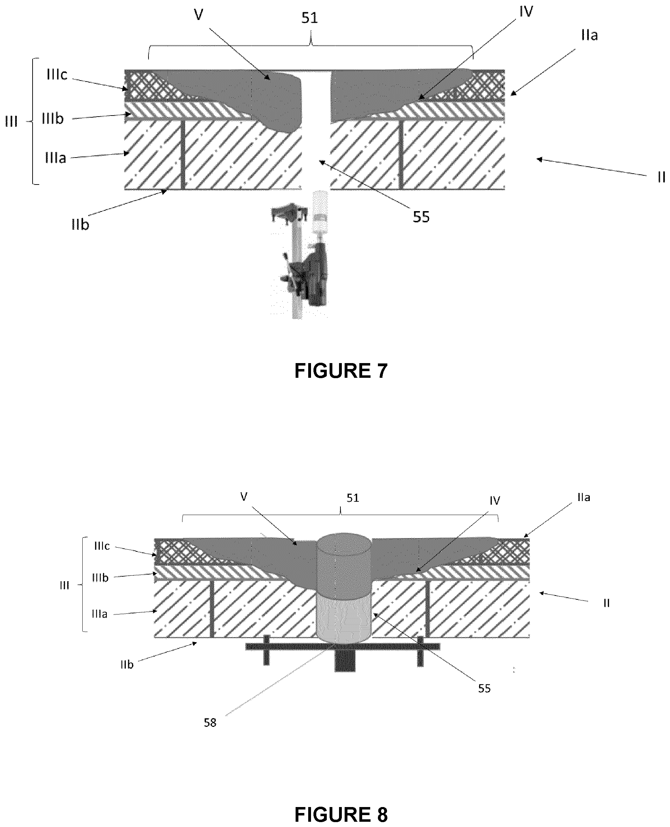

A cause de l'arrachement produit, et de l'état de surface irrégulier qui en résulte dans le premier trou 50, après l'extraction du dispositif d'injection 1, il peut être nécessaire de percer un deuxième trou 55 coaxiale du premier trou 50 et présentant un diamètre supérieur au diamètre du premier trou 50. Cette phase (c1), schématisé sur la figure 7, fait partie de l'étape (c) et permet d'obtenir un deuxième trou 55 présentant un état de surface sensiblement régulier.

Ensuite, l'étape (c) de bouchage comprend une deuxième phase (c2) de bouchage du premier trou 50 ou du deuxième trou 55 avec un matériau réfractaire, schématisée sur la figure 8.

En d'autres termes, la deuxième phase (c2) consiste en l'introduction d'un bouchon 58 dans le deuxième trou 55.

Le bouchon 58 est réalisé dans le même matériau réfractaire que le revêtement V et est scellé à la sole III. Typiquement le bouchon 58 peut être une carotte de béton scellée avec du béton humide (pas encore sec).

Il est précisé que la phase (c1) de perçage d'un deuxième trou 58 est optionnelle et qu'il est possible de directement introduire un bouchon 58 dans le premier trou 50.

Le perçage du deuxième trou 55 permet d'avoir un trou lisse dans lequel il est aisé d'introduire et de sceller le bouchon 58.

### Dispositif d'injection

Selon un deuxième aspect, l'invention concerne un dispositif d'injection 1 d'un revêtement V destiné à être utilisé pour une étape (b) d'injection du procédé selon l'invention.

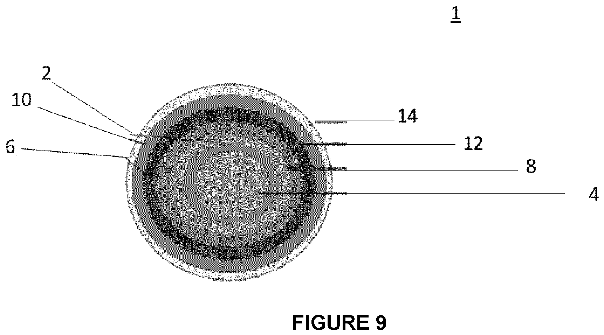

Schématiquement, tel que représenté sur la figure 9, le dispositif d'injection 1 est une lance d'injection présentant une pluralité de cylindres concentriques :
(i) un premier cylindre 2 définissant un premier volume 4 adapté pour la circulation et l'injection du revêtement V,
(ii) un deuxième cylindre 6 entourant le premier cylindre 2 définissant un deuxième volume 8 adapté pour l'introduction et la circulation d'un liquide de refroidissement VII autour du premier cylindre 2, et
iii) un troisième cylindre 10 entourant le second cylindre 6 définissant un troisième volume 12, communiquant avec le deuxième volume 8 et adapté pour la circulation et l'échappement du liquide de refroidissement VII.

Ainsi, en d'autres termes, tel que schématisé sur la figure 9, le dispositif d'injection 1 consiste en trois cylindres concentriques de diamètres croissants et empilés.

Le premier cylindre 2 définit un premier volume 4 dans lequel circule le revêtement V injecté. Comme indiqué précédemment, typiquement le revêtement injecté est un matériau réfractaire sous forme liquide ou pâteuse. En d'autres termes, le premier volume 4 est destiné à accueillir du béton liquide.

Le deuxième cylindre 6 et le troisième cylindre 10 permettent de définir des volumes réservés à la circulation d'un liquide de refroidissement IX. Typiquement le deuxième volume 8 qui est entre le premier cylindre 2 et le deuxième cylindre 6 reçoit le liquide de refroidissement IX injecté dans le dispositif d'injection 1. Le troisième volume 12 qui est entre le deuxième cylindre 6 et le troisième cylindre 10 permet l'échappement du liquide de refroidissement IX.

Ainsi, le deuxième volume 8 et le troisième volume 12 communiquent. En fonctionnement, du liquide de refroidissement IX (tel que de l'eau) est injecté dans le dispositif d'injection 1. Ce liquide parcourt l'ensemble du deuxième volume 8 et refroidit le premier cylindre 2 (et donc le premier volume 4). Puis, le liquide de refroidissement IX passe dans le troisième volume 12 d'où il ressort du dispositif d'injection 1.

Cette disposition est particulièrement avantageuse. En effet, comme indiqué précédemment, le procédé de réparation peut être mis en œuvre dans un four I ayant une température aux alentours de 1300 °C. Ainsi, le dispositif d'injection 1 permet d'une part un refroidissement en continu, et permet d'autre part de superposer des couches d'isolant sur le premier volume. En d'autres termes, le revêtement V circulant dans le premier volume 4 est refroidi en continu et isolé de la chaleur du four I par deux volumes successifs de liquide de refroidissement IX.

Il est précisé que le revêtement V et le liquide de refroidissement IX sont préférentiellement injectés par des pompes.

Une extrémité 16 du dispositif d'injection 1 présente une buse de pulvérisation qui permet de pulvériser le revêtement V. Cette buse permet de pulvériser le revêtement V de manière périphérique, selon un secteur angulaire défini. En d'autres termes, la buse permet de pulvériser le revêtement V sous la forme d'un nuage (ou d'un volume) sensiblement conique. Selon un premier mode de réalisation la buse projette le revêtement de manière périphérique, c'est-à-dire sensiblement à 360°. Selon un deuxième mode de réalisation, la buse projette le béton selon un cône, et pivote pour couvrir une surface périphérique de 360°.

Typiquement les cylindres peuvent être réalisés en acier ou en matériau polymère. Les contraintes de pression interne et de résistance à la chaleur dictent le choix et le dimensionnement des matériaux utilisés.

En outre, d'une manière avantageuse, le dispositif présente une longueur supérieure à la longueur du premier trou 50. En d'autres termes, le dispositif d'injection est dimensionné pour dépasser au-dessus de la face interne IIa, lorsqu'il est positionné dans le premier trou 50.

Il est précisé que pour réaliser l'étape de nettoyage, une pompe à eau peut être connecté au premier volume 4 du dispositif d'injection 1, pour nettoyer le dispositif d'injection.

D'une manière particulièrement avantageuse, le troisième cylindre 10 peut être entouré d'une couche sacrificielle 14 de textile et/ou d'isolant thermique.

Cette couche sacrificielle 14 est destinée à être partiellement (ou totalement) arrachée lorsque le dispositif d'injection 1 est extrait du premier trou 50. En effet, comme cela a été expliqué précédemment, le revêtement V injecté est préférentiellement un béton. Ce béton va partiellement sécher autour du dispositif d'injection 1. Ainsi, à la fin de l'étape (b) d'injection, le dispositif d'injection 1 peut être partiellement pris dans le béton constituant le revêtement V. L'extraction peut alors en être compliquée. La couche sacrificielle 14 permet très astucieusement d'avoir un enrobage du dispositif d'injection 1 qui est destiné à être pris dans le revêtement V. Lors de l'extraction du dispositif d'injection 1, cette couche sacrificielle 14 s'arrache en restant accrochée au revêtement V, et le dispositif d'injection 1 peut être extrait facilement et sans dommage.

D'une manière encore plus avantageuse, la couche sacrificielle 14 est constituée d'un textile thermiquement isolant. Ainsi, durant l'étape (b) d'injection, la couche sacrificielle 14 permet aussi d'isoler thermiquement le dispositif d'injection et plus particulièrement le revêtement V s'écoulant dans le premier volume 4.

## Revendications

1. Procédé de réparation d'une sole (III) en matériau réfractaire d'une paroi inférieure (II) d'un four (I), le procédé est **caractérisé en ce qu'**il comprend au moins les étapes suivantes :
(a) perçage depuis une face externe (IIb) de la paroi inférieure (II) d'un premier trou (50) dans la sole (III) débouchant au voisinage d'au moins une portion endommagée d'une face interne (IIa) de la paroi inférieure (II) ;
(b) à l'aide d'un dispositif d'injection (1), injection par le premier trou (50), d'un revêtement (V) sur une zone (51) de la sole (III) autour du premier trou (50) qui couvre ladite au moins une portion endommagée, ledit dispositif d'injection (1) étant refroidi en continu et isolé de la chaleur du four (I) par deux volumes concentriques de liquide de refroidissement ;
(c) bouchage du premier trou (50).

2. Procédé selon la revendication 1, comprenant une étape (a1) de chauffage de la zone (51) de la sole (III) autour du premier trou (50).

3. Procédé selon la revendication 2, dans lequel l'étape (a1) de chauffage est réalisée avec un bruleur (18).

4. Procédé selon l'une quelconque des revendications 2 ou 3, dans lequel l'étape (a1) de chauffage est réalisée en amenant la zone (51) autour du premier trou (50) à une température supérieure ou égale à une température de fusion d'un matériau déposé sur la sole (III), tel que du verre.

5. Procédé selon l'une quelconque des revendications 1 à 4, dans lequel l'étape (c) comprend une phase (c1) de perçage d'un deuxième trou (55) coaxial du premier trou (50) et présentant un diamètre supérieur au diamètre du premier trou (50), et dans lequel l'étape (c) comprend le bouchage du deuxième trou (55).

6. Procédé selon l'une quelconque des revendications 1 à 5, dans lequel l'étape (c) comprend une phase (c2) de bouchage du premier trou (50) ou du deuxième trou (55) avec un matériau réfractaire.

7. Procédé selon l'une quelconque des revendications 1 à 6, dans lequel l'étape (b) est réalisée sous surveillance vidéo.

8. Procédé selon l'une quelconque des revendications 1 à 7, comprenant une étape préalable (a0) de détection de ladite portion endommagée de la sole (III), pour réaliser l'étape (a) de perçage.

9. Procédé selon l'une quelconque des revendications 1 à 8, dans lequel l'étape (b) est réalisée en injectant le revêtement (V) à une altitude supérieure à l'altitude de la face interne, pour que le revêtement (V) s'écoule par gravité sur la zone (51).

10. Procédé selon l'une quelconque des revendications 1 à 9, comprenant en outre, après l'injection d'une quantité de revêtement, un arrachement d'au moins une partie d'une couche sacrificielle du dispositif d'injection (1) pour extraire le dispositif d'injection du premier trou (50).

11. Procédé selon l'une quelconque des revendications 1 à 10, dans lequel, pendant la mise en œuvre des étapes (a) à (c), le four est à une température comprise entre 1300 et 1600°C.

12. Dispositif d'injection (1) adapté pour mettre en œuvre un procédé selon l'une quelconque des revendications 1 à 11, le dispositif d'injection (1) comprenant une lance d'injection présentant une pluralité de cylindres concentriques :
(i) un premier cylindre (2) définissant un premier volume (4) adapté pour la circulation et l'injection du revêtement (V) sous forme liquide ou pâteuse,
(ii) un deuxième cylindre (6) entourant le premier cylindre (2) définissant un deuxième volume (8) adapté pour l'introduction et la circulation d'un liquide de refroidissement (VII) autour du premier cylindre (2), et
(iii) un troisième cylindre (10) entourant le second cylindre (6) définissant un troisième volume (12), communiquant avec le deuxième volume (8) et adapté pour la circulation et l'échappement du liquide de refroidissement (VII).

13. Dispositif d'injection (1) selon la revendication 12, dans lequel le troisième cylindre (10) est entouré d'une couche sacrificielle (14) adaptée pour être au moins partiellement arrachée après une injection d'une quantité de revêtement.
